# EUROPÄISCHE PATENTSCHRIFT

(11) **EP 1 077 025 B1**
(45) Veröffentlichungstag und Bekanntmachung des Hinweises auf die Patenterteilung: **15.10.2008**
(21) Anmeldenummer: 99116144.9
(22) Anmeldetag: 19.08.1999
(51) Int. Cl.: A01F 15/07

(54) **Landwirtschaftliche Funktionseinheit**
Agricultural functional unit
Unité fonctionnelle agricole

(43) Veröffentlichungstag der Anmeldung: 21.02.2001
(73) Patentinhaber: Kverneland Gottmadingen GmbH & Co. KG, 78244 Gottmadingen (DE)
(72) Erfinder: Kriebs, Jörg, 88690 Uhldingen-Mühlhofen (DE); Kaeppeler, J., 78333 Stockach (DE)
(74) Vertreter: Grünecker, Kinkeldey, Stockmair & Schwanhäusser Anwaltssozietät

(56) Entgegenhaltungen:
- EP-A- 0 424 192
- EP-A- 0 543 145
- WO-A-90/14756
- GB-A- 2 221 203

## Beschreibung

Die Erfindung betrifft eine landwirtschaftliche Funktionseinheit der im Oberbegriff des Anspruchs 1 angegebenen Art.

In einer solchen aus der Praxis bekannten Funktionseinheit wird der von der Ballenpresse ausgestoßene Rundballen im Wickler mit Folienmaterial umwickelt, ehe er auf dem Feld abgelegt wird. Im Hinblick auf gute Manövrierbarkeit der Funktionseinheit ist der Wickler in Zuordnung zur Heckklappe der Ballenpresse auf demselben Fahrwerk angeordnet, wobei die Übergabeeinrichtung nach Öffnen der Heckklappe den fertigen und eingebundenen Rundballen auf einen Wickeltisch des Wicklers fördert. Zwei Bauweisen sind üblich. Im einen Fall wird der Wickeltisch in die Ausgangsposition unter die Heckklappe geschoben, und mit dem darauf liegenden Rundballen in die Wickelstation des Wicklers überführt. Die Wickeltischführung bedingt dort eine geringe Bodenfreiheit der Funktionseinheit, ferner ist die ordnungsgemäße Übergabe bei schrägstehender oder bergabstehender Funktionseinheit gefährdet. Im zweiten Fall ist die Übergabeeinrichtung eine zwischen der Ballenpresse und dem Wickler in der Rahmenstruktur gelagerte Schwinge mit langem Hebelarm, die den Rundballen aufnimmt und in den Wickler fördert. In beiden Fällen wird die Funktionseinheit während der Übergabe des Rundballens solange angehalten, bis die Übergabeeinrichtung wieder vollständig in die Ausgangsposition gestellt ist. Erst dann kann die Funktionseinheit losfahren und Erntegut aufnehmen, um einen neuen Rundballen zu formen. Die dadurch bedingte lange Stillstandszeit beschränkt die gegebene Kapazität der Funktionseinheit.

Bei der aus GB 22 21 203 A bekannten Funktionseinheit ist der Wickler an das Heck der Rundballenpresse angehängt. Die Rundballenpresse weist im Bereich der Heckklappe einen Ablenker auf, mit dem ein fertiger Rundballen nach Öffnen der Heckklappe auf das Förderelement des hinteren Teils abgeworfen und danach von diesem entgegen der Fahrtrichtung auf den Wickeltisch gefördert wird. Der Wickler besitzt ein eigenes Fahrwerk und eine den Wickeltisch und den hinteren Teil enthaltende Rahmenstruktur, die an die Rundballenpresse angekoppelt ist. Die Funktionseinheit baut lang. Die Rundballen werden relativ grob behandelt, da sie vom Ablenker relativ weit bis auf das Förderelement des hinteren Teils abgeworfen werden. Die Bodenfreiheit ist beschränkt.

Der Erfindung liegt die Aufgabe zugrunde, eine landwirtschaftliche Funktionseinheit der eingangs genannten Art mit signifikant verbesserter Kapazität zu schaffen.

Die gestellte Aufgabe wird mit den Merkmalen des Anspruchs 1 gelöst.

Da sich der in Fahrtrichtung hintere Teil der Übergabeeinrichtung auch bei bereits schließender oder geschlossener Heckklappe der Ballenpresse noch in die Ausgangsposition verstellen lässt, kann die Heckklappe sehr früh wieder geschlossen werden. Demzufolge kann die Funktionseinheit früher als bisher losfahren und mit der Formung eines neuen Rundballens beginnen. Dadurch lässt sich die Kapazität der Ballenpresse signifikant besser nutzen. Ferner ist bei der Übergabe des fertigen Rundballens an den Wickler keine Eile mehr geboten, wenn die Heckklappe so schnell wie möglich schließt, und kann deshalb der fertige Rundballen sehr sicher und ordnungsgemäß platziert werden. Somit wird die Übergabequalität verbessert, d.h. kann die Übergabe an den Wickler sehr präzise abgeschlossen werden. Auch die Rückstellung des in Fahrtrichtung hinteren Teils in die Ausgangsposition unterliegt keinem Zeitdruck mehr, so dass die mechanischen Komponenten der Übergabeeinrichtung geschont werden. Wenn die Hüllkurve des Bewegungswegs des hinteren Teils der Übergabeeinrichtung außerhalb des Umrisses der geschlossenen Heckklappe liegt, ist eine Kollision in diesem Bereich ausgeschlossen. Für die Qualität der Ballenübergabe ist es zweckmäßig, in jedem Teil der Fördereinrichtung ein schwenkbares Förderelement vorzusehen. Mit Schwenkbewegungen lässt sich eine Übergabe vollziehen, die relativ unbeeinflusst ist von eventuellen Schräglagen oder Neigungen der Funktionseinheit während der Übergabe. Ferner sind einfache kinematische Verhältnisse gegeben, die eine große Bodenfreiheit ermöglichen.

Baulich einfach sind die Förderelemente gabelartig ausgebildet. Dennoch wird die Übergabe zuverlässig durchgeführt.

Alternativ kann jedes Förderelement als Rahmen mit einem zur Schwenkachse parallelen Querholm ausgebildet sein, um einen möglichst gleichmäßigen und großflächigen Angriff am Rundballen zu erzielen.

Dabei ist es günstig, wenn am Querholm wenigstens eine frei drehbare Rolle oder Walze vorgesehen ist, damit die Relativbewegungen zwischen dem Umfang des Rundballens und dem Förderelement bei der Übergabe keine Beschädigungen am Rundballen bzw. an dem Bindematerial des Rundballens hervorrufen.

Im Hinblick auf optimale Bodenfreiheit ist es zweckmäßig, den Querholm des hinteren Förderelementes in der Ausgangsposition in einer Aufnahme der Rahmenstruktur versenkt anzuordnen. Günstig ist der wirksame Hebelarm des hinteren Förderelements größer als der des vorderen Förderelements. Das vordere Förderelement braucht den Rundballen nur aus dem Schwenkbereich der Heckklappe zu transportieren, was relativ schnell erfolgen kann. Den größeren Teil bzw. Weg der Übergabe in den Wickler übernimmt das hintere, längere Förderelement. Der Einsatz des kürzeren vorderen Förderelements ist nach kurzer Zeit abgeschlossen, so dass die Heckklappe frühzeitig wieder geschlossen werden kann.

Im Hinblick auf eine optimale Bodenfreiheit sollten beide Teile der Übergabeeinrichtung in die Rahmenstruktur der Funktionseinheit eingegliedert sein. Zwischen den beiden Teilen kann in der Rahmenstruktur ein Querträger für die nötige Aussteifung sorgen, weil die einander zuarbeitenden Teile der Übergabeeinrichtung den Rundballen problemlos über diesen Querträger hinwegfördem können. Dabei ist es zweckmäßig, wenn am Ort dieses Querträgers die Radachse oder eine Pendelachse eines mehrachsigen Tandemfahrwerks angeordnet ist, insbesondere im Hinblick auf den nach hinten gerückten Schwerpunkt der aus Ballenpresse und Wickler zusammengesetzen Funktionseinheit. Ein wichtiger Gesichtspunkt ist die Abnehmbarkeit des Wicklers von der Ballenpresse, die nach Abnehmen des Wicklers wie eine herkömmliche Ballenpresse verwendbar ist. Abhängig von der Jahreszeit und/oder der Art des Erntegutes ist nämlich der Wickler nicht immer erforderlich. Dann braucht seine Masse nichtt als unnötiger Ballast mitgenommen zu werden. Zweckmäßiger wird bei Abnehmen des Wicklers auch der hintere Teil der Übergabeeinrichtung von der Ballenpresse entfernt, so dass der verbleibende vordere Teil der Übergabeeinrichtung nur mehr als normaler Auswerfer der Ballenpresse fungiert. Er hebt dabei den Ballen über den Querträger in der Rahmenstruktur. Weiterhin ermöglicht die abnehmbare Anbringung des Wicklers die Nachrüstung einer Rundballenpresse in eine solche Funktionseinheit, bzw. kann der Wickler mit einer anderen Rundballenpresse kombiniert werden. Dies ist wichtig im Hinblick darauf, dass die Lebensdauer einer Rundballenpresse im Normalfall nur ungefähr der halben Lebensdauer des Wicklers entspricht.

Anhand der Zeichnung wird eine Ausführungsform des Erfindungsgegenstandes erläutert. Es zeigen:

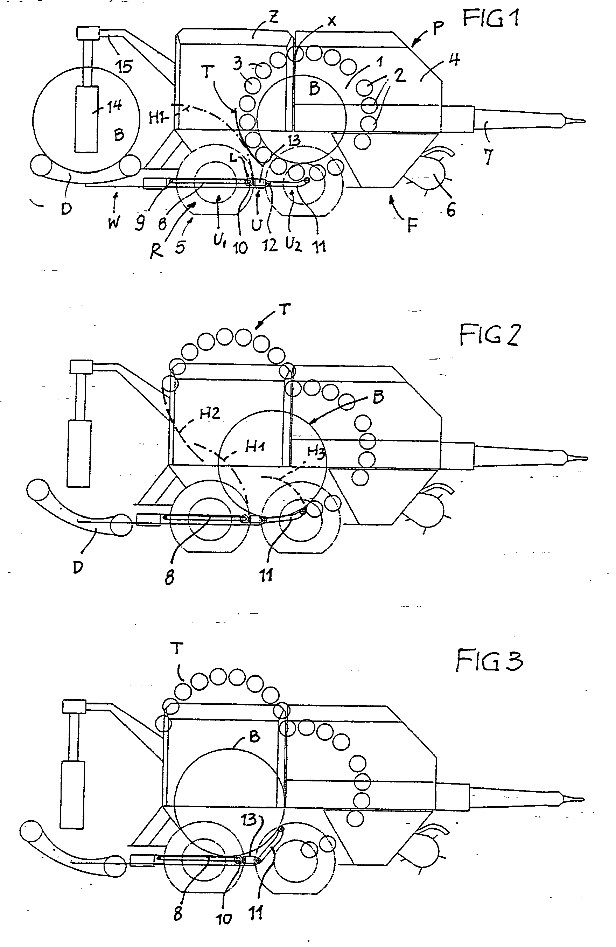

- Fig. 1 - 5: jeweils Seitenansichten einer landwirtschaftlichen Funktionseinheit in mehreren aufeinanderfolgenden Betriebsphasen.

Eine landwirtschaftliche Funktionseinheit F in Fig. 1 besteht aus einer Rundballenpresse P und einem hinter dieser angeordneten Wickler W. Die Ballenpresse P und der Wickler W teilen sich ein gemeinsames Fahrwerk 5. Gegebenenfalls ist der Wickler W als Huckepack-Wickler mit Schnellverschlüssen abnehmbar an der Ballenpresse P oder deren Rahmenstruktur angebracht. Der Wickler kann dann - falls nicht gebraucht- abgenommen werden, um die Ballenpresse P in herkömmlicher Weise zu benutzen, oder - wie gezeigt - angebracht sein, um die hergestellten und eingebundenen Rundballen in Folienmaterial einzuwickeln. Der abnehmbare Wickler W könnte auch auf andere entsprechend vorbereitete Ballenpressen P aufgesattelt werden.

Die Ballenpresse P weist eine annähernd kreisrunde Presskammer 1 auf, die von in einem Gehäuse 4 untergebrachten Presselementen 2 und von in einer Heckklappe T untergebrachten Presselementen 3 begrenzt wird. Die Heckklappe T ist um eine Horizontalachse X schwenkbar am Gehäuse 4 angeordnet, derart, dass sie sich aus der in Fig. 1 gezeigten geschlossenen Stellung in die in Fig. 2 gezeigte Auswurfstellung verschwenken läßt, beispielsweise mittels hydraulischer Einrichtungen.

Das Gehäuse 4 der Rundballenpresse P bzw. eine nicht näher hervorgehobene Rahmenstruktur R sitzt auf dem Fahrwerk 5, im gezeigten Fall auf einem Tandemfahrwerk, das im Bereich eines Querträgers 13 der Rahmenstruktur R eine Tandem-Pendelachse besitzen kann. Im vorderen Teil des Gehäuses 4 sind eine Pick-up-Vorrichtung vorgesehen und eine Zugdeichsel 7, mit der die Funktionseinheit F oder die Rundballenpresse P allein an einen Schlepper angehängt wird, der die Antriebsenergie zur Verfügung stellt und von dem aus ggfs. die Steuerung der Funktionseinheit vornehmbar ist.

Zwischen dem Gehäuse 4 der Ballenpresse P und dem Wickler W ist ein Zusatzrahmen Z (beiderseits der Heckklappe T) vorgesehen. Ferner ist in den unteren Teil der Funktionseinheit F eine Übergabeeinrichtung U integriert, die aus einem in Fahrtrichtung hinteren Teil U1 und einem in Fahrtrichtung vorderen Teil U2 besteht, wobei der Teil U2 dem Teil U1 zuarbeitet. Beide Teile U1, U2 können separat gesteuert werden, z.B. mittels nicht gezeigter Hydraulikzylinder.

In jedem Teil U1, U2 ist ein Förderelement 8, 11 vorgesehen, das um eine horizontale Achse 9 bzw. 12 zwischen der gezeigten Ausgangsposition und einer um beispielsweise 90° entgegen dem Uhrzeigersinn verschwenkten Übergabeposition hin- und herverstellbar ist. Die Förderelemente 8, 11 können gabelförmig oder als Rahmen ausgebildet sein. Bei der gezeigten Ausführungsform sind die Förderelemente 8, 11 querliegende Rahmen, die einen zur jeweiligen Achse 9, 12 im wesentlichen parallelen Querholm (beim Förderelement 8 der Querholm 10) aufweisen. Zweckmäßigerweise ist der Querholm 10 des Förderelementes 8 mit frei drehbaren Rollen oder wenigstens einer Walze L versehen.

Ein Teil des Umrisses der Heckklappe T ist mit einem voll gezeichneten Bogen angedeutet. Der Querholm 10 des Förderelementes 8 wird entlang eines Bewegungsweges verstellt, dessen Hüllkurve strichpunktiert mit H1 angedeutet ist. Es ist zu erkennen, daß die Hüllkurve H1 einen Abstand zum Umriß der geschlossenen Heckklappe T einhält.

Im Wickler W sind an einem Tragrahmen 15 ein Wickeltisch D und wenigstens eine mit einer Folienrolle bestückte Wickeleinheit 14 vorgesehen. In Fig. 1 ist in der Preßkammer 1 ein im Wachsen begriffener Rundballen B angedeutet, während auf dem Wickeltisch D ein fertiger, eingebundener Rundballen B mit Folienmaterial umwickelt wird.

### Betriebsablauf:

Gemäß Fig. 1 fährt die Funktionseinheit F über das Feld. Die Pick-up-Vorrichtung 6 nimmt fortlaufend Erntegut auf, das in der Preßkammer 1 zum Rundballen B gewickelt und gepreßt wird. Die Heckklappe T ist geschlossen. Die Übergabeeinrichtung U befindet sich in der Ausgangsposition, in der beide Förderelemente 8, 11 im wesentlichen bodenparallel orientiert sind.

Sobald der Rundballen B in der Preßkammer 1 fertiggestellt ist, hält die Funktionseinheit F an. Der fertige Rundballen wird dann oder ist gegebenenfalls schon voreilend in Bindematerial eingebunden. Die Heckklappe T wird aufgeschwenkt, bis der Rundballen B auf das Förderelement 11 gelangt, das entlang eines Bewegungsweges verstellbar ist, dessen Hüllkurve H3 in Fig. 2 strichliert angedeutet ist. Die Hüllkurve H2 ergibt sich aus der Schwenkbewegung der Heckklappe T um die Achse X. Die Hüllkurve H1 ergibt sich aus der Schwenkbewegung des Förderelementes 8 um die Achse 9.

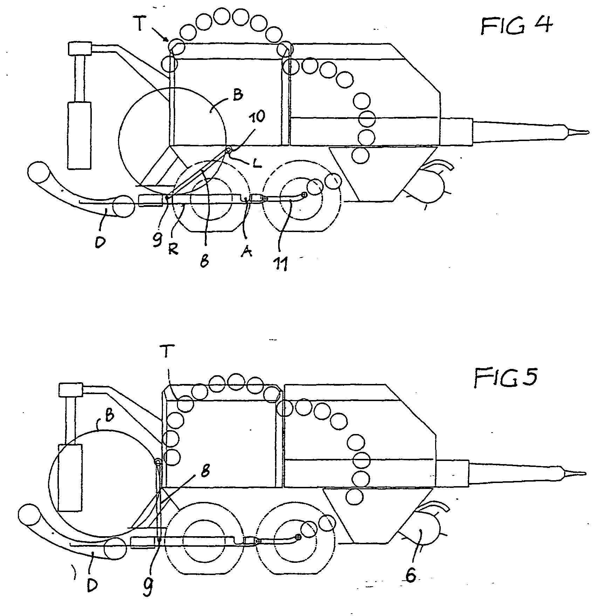

In der Betriebsphase von Fig. 2 wird das Förderelement 11 entgegen dem Uhrzeigersinn verschwenkt, wobei es den Rundballen B über den Querträger 13 hinweg auf das Förderelement 8 verlagert (Fig. 3). Dann wird das Förderelement 11 in seine Ausgangsposition zurückverstellt und das Förderelement 8 entgegen dem Uhrzeigersinn um die Achse 9 verschwenkt, bis sich der Rundballen B zum Wickeltisch D bewegt, der zur leichteren Übergabe in eine gekippte Position (Fig. 4) verstellt ist. Die Heckklappe T ist nach wie vor geöffnet. Sobald das Förderelement 8 so weit verschwenkt ist, daß der Querholm 10 nicht mehr mit der Heckklappe T zu kollidieren vermag, wird die Heckklappe T umgehend geschlossen (Fig. 5). Dabei wird zur Sicherheit ein vom Wickler abgegebenes Freigabesignal berücksichtigt. Obwohl die Heckklappe T im weiteren Verlauf schon wieder geschlossen ist, und die Funktionseinheit wieder losfahrt, kann das Förderelement 8 dennoch den Rundballen B langsam und sorgfältig auf den Wickeltisch D bringen, auf dem der Wickelvorgang mit dem Folienmaterial abläuft. Im Anschluß daran wird das Förderelement 8 in die Ausgangsposition gemäß Fig. 1 zurückgestellt, wobei keine Kollision mit der geschlossenen Heckklappe T eintritt.

Da die Heckklappe T bereits geschlossen werden kann, ehe die Übergabe des Rundballens an den Wickler vollständig abgeschlossen ist, und die Funktionseinheit nach Schließen der Heckklappe T sofort wieder losfahren kann, läßt sich die Kapazität der Ballenpresse besser nutzen.

Die beiden Teile U1, U2 der Übergabeeinrichtung U müssen nicht notwendigerweise mit schwenkbaren gabelförmigen oder rahmenförmigen Förderelementen versehen sein, sondern es können hier auch andere Arten von Förderelementen und andere Bewegungssysteme mit Teilschwenkbewegungen oder ohne Schwenkbewegungen benutzt werden. Entscheidend ist, daß die Übergabe des fertigen Rundballens an den Wickler in zwei Phasen erfolgt, von denen die zweite Phase und die Rückstellung des für die zweite Phase verantwortlichen Förderelements unabhängig davon durchgeführt werden, ob die Heckklappe weiterhin offen oder bereits geschlossen ist oder geschlossen wird. Daraus resultiert nämlich der Vorteil eines möglichst frühzeitigen Schließens der Heckklappe und damit eine bessere Nutzung der Kapazität der Ballenpresse. Ob zum Zeitpunkt des Schließens der Heckklappe die Übergabe des Rundballens an den Wickler bereits vollständig vollzogen ist, oder nicht, ist von sekundärer Bedeutung, solange die Rückstellbewegung zumindest eines Teils der Übergabeeinrichtung auch nach dem vorhergehenden Schließen der Heckklappe erfolgt.

## Patentansprüche

1. Landwirtschaftliche Funktionseinheit (F), mit einer Rundballenpresse (P), die eine hochschwenkare Heckklappe (T) aufweist und auf einem Fahrwerk (5) angeordnet ist, mit einem in einer Ballen-Übernahmezuordnung zur Rundballenpresse vorgesehenen Wickler (W), und mit einer zwischen der Rundballenpresse (P) und dem Wickler (W) vorgesehenen Ballen-Übergabeeinrichtung (U); die aus zwei einander zuarbeitenden Teilen (U1, U2) jeweils mit einem Förderelement (8, 11) besteht, die in Fahrtrichtung hintereinander liegen, und von denen zumindest das Förderelement (8) des hinteren Teils (U1) zwischen einer Rundballen-Aufnahme-Ausgangsposition und Rundballen-Übergabepositionen verstellbar ist, **dadurch gekennzeichnet, dass** jedes Förderelement (8, 11) in der Ausgangsposition annähernd bodenparallel liegt und aus der Ausgangsposition um eine horizontale Achse (9, 12) entgegen der Fahrtrichtung hochschwenkbar ist, dass das Förderelement (11) des in Fahrtrichtung vorderen Teils (U2) unterhalb der Heckklappe (T) angeordnet ist, und dass sich das Förderelement (8) des in Fahrtrichtung hinteren Teils (U1) entgegen der Fahrtrichtung so weit unter die Heckklappe (T) erstreckt, dass eine Hüllkurve (H1) der Schwenkbewegung des Förderelements (8) bei geschlossener Heckklappe (T) einen Abstand zum Umriss der Heckklappe hat, hingegen eine sich aus der Schwenkbewegung der Heckklappe (T) ergebende Hüllkurve (H2) überschneidet.

2. Funktionseinheit nach Anspruch 1, **dadurch gekennzeichnet, dass** jedes Förderelement (8, 11) über in etwa 90° schwenkbar ist.

3. Funktionseinheit nach Anspruch 1, **dadurch gekennzeichnet, dass** jedes Förderelement (8, 11) gabelartig ausgebildet ist.

4. Funktionseinheit nach Anspruch 1, **dadurch gekennzeichnet, dass** jedes Förderelement (8, 11) als Rahmen mit einem zur Achse (9, 12) annähernd parallelen Querholm (10) ausgebildet ist, und dass am Querholm (10) wenigstens eine frei drehbare Rolle oder Walze (L) vorgesehen ist.

5. Funktionseinheit nach Anspruch 4, **dadurch gekennzeichnet, dass** der Querholm (10) bzw. die Rolle oder Walze (L) in der Ausgangsposition in einer Aufnahme (A) einer Rahmenstruktur (R) versenkt angeordnet ist.

6. Funktionseinheit nach Anspruch 1, **dadurch gekennzeichnet, dass** sich der Wickler (W) und die Rundballenpresse (P) ein gemeinsames Fahrwerk (5) teilen, und dass der Wickler (W) abnehmbar an einer Rahmenstruktur (R) der Rundballenpresse (P) angeordnet ist.

7. Funktionseinheit nach Anspruch 1, **dadurch gekennzeichnet, dass** die beiden Teile (U1, U2) in der Rahmenstruktur (R) der Funktionseinheit (F), angeordnet sind, in der zwischen den beiden Teilen (U1, U2) bei einer Rad- oder Pendelachse des Fahrwerks (5) ein Querträger (13) vorgesehen ist, dass der Wickler (W) lösbar mit der Rahmenstruktur (R) verbunden und der hintere Teil (U1) der Übergabeeinrichtung (U) dem Wickler (W) angehört und mit diesem abnehmbar ist, und dass das Förderelement (11) des vorderen Teils (U2) bei mit dem hinteren Teil (U1) von der Rundballenpresse (P) abgenommenem Wickler (W) einen den jeweiligen Rundballen (B) über den Querträger (13) der Rahmenstruktur (R) hebenden Auswerfer der Rundballenpresse (P) bildet.

## Claims

1. Agricultural functional unit (F), having a rolled bale press (P) which includes an upwardly pivotable rear flap (T) and is disposed on a chassis (5), a winder (W) which is provided in a bale transfer association with the rolled bale press, and a bale delivery means (U) which is provided between the rolled bale press (P) and the winder (W) and comprises two parts (U1, U2) which co-operate with each other and each have a respective conveying member (8, 11), which members lie one behind the other when viewed with respect to the direction of travel, and of which members at least the conveying member (8) of the rear part (U1) is adjustable between a rolled bale receiving initial position and rolled bale delivery positions, **characterised in that** each conveying member (8, 11) lies approximately parallel to the ground in the initial position and is upwardly pivotable from the initial position about a horizontal axle (9, 12) in opposition to the direction of travel, **in that** the conveying member (11) of the front part (U2), when viewed with respect to the direction of travel, is disposed beneath the rear flap (T), and **in that** the conveying member (8) of the rear part (U1), when viewed with respect of the direction of travel, extends so far beneath the rear flap (T) in opposition to the direction of travel that an envelope curve (H1) of the pivotal movement of the conveying member (8), when the rear flap (T) is closed, has a spacing from the periphery of the rear flap but overlaps an envelope curve (H2) arising from the pivotal movement of the rear flap (T).

2. Functional unit according to claim 1, **characterised in that** each conveying member (8, 11) is pivotable over substantially 90°.

3. Functional unit according to claim 1, **characterised in that** each conveying member (8, 11) has a bifurcated configuration.

4. Functional unit according to claim 1, **characterised in that** each conveying member (8, 11) is in the form of a frame with a cross-beam (10) which is approximately parallel to the axle (9, 12), and **in that** at least one freely rotatable roll or roller (L) is provided on the cross-beam (10).

5. Functional unit according to claim 4, **characterised in that** the cross-beam (10) or respectively the roll or roller (L) is disposed, in the initial position, in a countersunk manner in a receiver (A) of a frame structure (R).

6. Functional unit according to claim 1, **characterised in that** the winder (W) and the rolled bale press (P) share a common chassis (5), and **in that** the winder (W) is removably disposed on a frame structure (R) of the rolled bale press (P).

7. Functional unit according to claim 1, **characterised in that** the two parts (U1, U2) are disposed in the frame structure (R) of the functional unit (F), in which a cross-piece member (13) is provided between the two parts (U1, U2) when the chassis (5) has a wheel axle or an oscillating axle, **in that** the winder (W) is releasably connected to the frame structure (R), and the rear part (U1) of the delivery means (U) belongs to the winder (W) and is removable with said winder, and **in that** the conveying member (11) of the front part (U2) forms an ejector of the rolled bale press (P), which lifts the respective rolled bale (B) over the cross-piece member (13) of the frame structure (R), when the winder (W) has been removed from the rolled bale press (P) with the rear part (U1).

## Revendications

1. Unité fonctionnelle agricole (F), avec une presse de balle ronde (P) qui présente un hayon (T) apte à être pivoté vers le haut et qui est disposé sur un mécanisme de roulement (5), et avec un dispositif d'enroulement (W) prévu dans un organe d'attribution de reprise de balle à la presse de balle ronde, avec un dispositif de transfert de balle (U) prévu entre la presse de balle ronde (P) et le dispositif d'enroulement (W), qui est constitué de deux parties (U1, U2) coopérants l'une avec l'autre, respectivement avec un élément de convoyage (8, 11), qui sont situés dans la direction de roulement l'une derrière l'autre, et dont au moins l'élément de convoyage (8) de la partie arrière (U1) est ajustable entre une position de départ de réception de balle ronde et une position de transfert de balle ronde, **caractérisée en ce que** chaque élément de convoyage (8, 11) en position de départ, est approximativement parallèle au sol et peut être amené vers le haut depuis la position de départ autour d'un axe horizontal (9, 12) contre la direction de roulement, **en ce que** l'élément de convoyage (11) de la partie (U2) avant dans la direction de roulement est disposé en dessous du hayon (T), et **en ce que** l'élément de convoyage (8) de la partie (U1) arrière dans la direction de roulement s'étend contre la direction de roulement sur une distance suffisante sous le hayon (T) pour qu'une enveloppante (H1) du mouvement de pivotement de l'élément de convoyage (8), lorsque le hayon (T) est fermé, se trouve à une distance du contour du hayon, cependant chevauche une enveloppante (H2) résultant du mouvement de pivotement du hayon (T).

2. Unité fonctionnelle selon la revendication 1, **caractérisée en ce que** chaque élément de convoyage (8, 11) peut être amené à pivoter selon environ 90°.

3. Unité fonctionnelle selon la revendication 1, **caractérisée en ce que** chaque élément de convoyage (8, 11) est réalisé en forme de fourche.

4. Unité fonctionnelle selon la revendication 1, **caractérisée en ce que** chaque élément de convoyage (8, 11) est réalisé comme cadre avec un brin transversal approximativement parallèle à l'axe (9, 12) et **en ce qu'**il est prévu au brin transversal (10) au moins un rouleau ou cylindre (L) tournant librement.

5. Unité fonctionnelle selon la revendication 4, **caractérisée en ce que** le brin transversal (10) respectivement le rouleau ou cylindre (L), en position de départ, est noyé dans un logement (A) d'une structure de cadre (R).

6. Unité fonctionnelle selon la revendication 1, **caractérisée en ce que** le dispositif d'enroulement (W) et la presse de balle ronde (P) partagent un mécanisme de roulement commun (5), et **en ce que** le dispositif d'enroulement (W) est disposé amoviblement à une structure de cadre (R) de la presse de balle ronde (P).

7. Unité fonctionnelle selon la revendication 1, **caractérisée en ce que** les deux parties (U1, U2) sont disposées dans la structure de cadre (R) de l'unité fonctionnelle (F), dans laquelle est prévue entre les deux parties (U1, U2), près d'un essieu de roue ou à suspension du mécanisme de roulement (5) une traverse (13), **en ce que** le dispositif d'enroulement (W) est relié amoviblement à la structure de cadre (R), et la partie arrière (U1) de l'installation de transfert (U) appartient au dispositif d'enroulement (W) et peut être retirée avec celui-ci, et **en ce que** l'élément de convoyage (11) de la partie avant (U2), lors d'un dispositif d'enroulement (w) retiré avec la partie arrière (U1) de la presse de balle ronde (P), forme un éjecteur de la presse de balle ronde (P) relevant la balle ronde respective (B) par-dessus la traverse (13) de la structure de cadre (R).
